# EUROPEAN PATENT APPLICATION

(11) **EP 4 300 171 A1**
(43) Date of publication of application: **03.01.2024**
(21) Application number: 22759315.9
(22) Date of filing: 02.02.2022
(51) Int. Cl.: G02B 30/56, B60K 35/00, G02B 5/124, G02B 27/01, G03B 35/24, H04N 13/315, H04N 13/346, H04N 13/363

(54) **AERIAL IMAGE PROJECTION APPARATUS AND MOBILE OBJECT**

(30) Priority: 24.02.2021 JP 2021027845
(71) Applicant: Kyocera Corporation, Kyoto-shi Kyoto 612-8501 (JP)
(72) Inventor: SHIMOSE, Kazuki, Kyoto-shi, Kyoto 612-8501 (JP); KUSAFUKA, Kaoru, Kyoto-shi, Kyoto 612-8501 (JP)
(74) Representative: TBK
(86) International application number: PCT/JP2022/004091
(87) International publication number: WO 2022/181274

(57) **Abstract**

An aerial image projector includes a first reflective element, a second reflective element, a first optical element, a first display device, and a second display device. The first reflective element transmits, in a second direction, a part of first image light traveling in a first direction, reflects, in a third direction, a part of second image light traveling in the second direction, and transmits, in the third direction, a part of third image light traveling in a fourth direction. The second reflective element retroreflects the first image light transmitted through the first reflective element as the second image light. The first optical element is between the first reflective element and the second reflective element and collects the first image light and the second image light. The first display device emits the first image light. The second display device emits the third image light.

## Description

### TECHNICAL FIELD

The present disclosure relates to an aerial image projector and a movable body.

### BACKGROUND OF INVENTION

A known technique is described in, for example, Patent Literature 1.

### CITATION LIST

### PATENT LITERATURE

Patent Literature 1: Japanese Unexamined Patent Application Publication No. 2011-253128

### SUMMARY

In an aspect of the present disclosure, an aerial image projector includes a first reflective element, a second reflective element, a first optical element, a first display device, and a second display device. The first reflective element transmits, in a second direction, a part of first image light traveling in a first direction and representing an image, reflects, in a third direction, a part of second image light traveling in the second direction, and transmits, in the third direction, a part of third image light traveling in a fourth direction. The second reflective element retroreflects the first image light transmitted through the first reflective element as the second image light. The first optical element is between the first reflective element and the second reflective element and collects the first image light and the second image light. The first display device emits the first image light. The second display device emits the third image light.

In another aspect of the present disclosure, a movable body includes the aerial image projector.

### BRIEF DESCRIPTION OF THE DRAWINGS

The objects, features, and advantages of the present disclosure will become more apparent from the following detailed description and the drawings.
FIG. 1 is a schematic diagram of an aerial image projector according to one embodiment of the present disclosure.
FIG. 2 is a schematic diagram of the aerial image projector according to the embodiment of the present disclosure as viewed in a direction different from the direction in FIG. 1.
FIG. 3 is a schematic diagram of an aerial image projector according to a variation of the embodiment of the present disclosure.
FIG. 4 is a schematic diagram of an aerial image projector according to another embodiment of the present disclosure.
FIG. 5 is a schematic diagram of an aerial image projector according to another embodiment of the present disclosure.
FIG. 6 is a schematic diagram of an aerial image projector according to another embodiment of the present disclosure.
FIG. 7 is a schematic diagram of an aerial image projector according to another embodiment of the present disclosure.
FIG. 8 is a schematic diagram of an aerial image projector according to another embodiment of the present disclosure.
FIG. 9 is a schematic diagram of an aerial image projector according to another embodiment of the present disclosure.
FIG. 10 is a schematic diagram of an aerial image projector according to another embodiment of the present disclosure.
FIG. 11 is a schematic diagram of an aerial image projector according to another embodiment of the present disclosure.
FIG. 12 is a schematic diagram of an aerial image projector according to another embodiment of the present disclosure.
FIG. 13 is a schematic diagram of an aerial image projector according to another embodiment of the present disclosure.
FIG. 14 is a schematic diagram of an aerial image projector according to another embodiment of the present disclosure.
FIG. 15 is a diagram of the polarization states of first image light, second image light, and third image light.
FIG. 16 is a diagram of the Poincaré sphere representing the polarization states of the first image light and the second image light.
FIG. 17 is a schematic diagram of a movable body according to one embodiment of the present disclosure.

### DESCRIPTION OF EMBODIMENTS

Various aerial image projectors have been developed to form an aerial image from image light emitted from a display.

More information is to be presented by the aerial image to a user.

One or more embodiments of the present disclosure will now be described with reference to the drawings. The drawings used herein are schematic. The drawings used herein are not drawn to scale relative to the actual size of each component and do not indicate the actual traveling path of light.

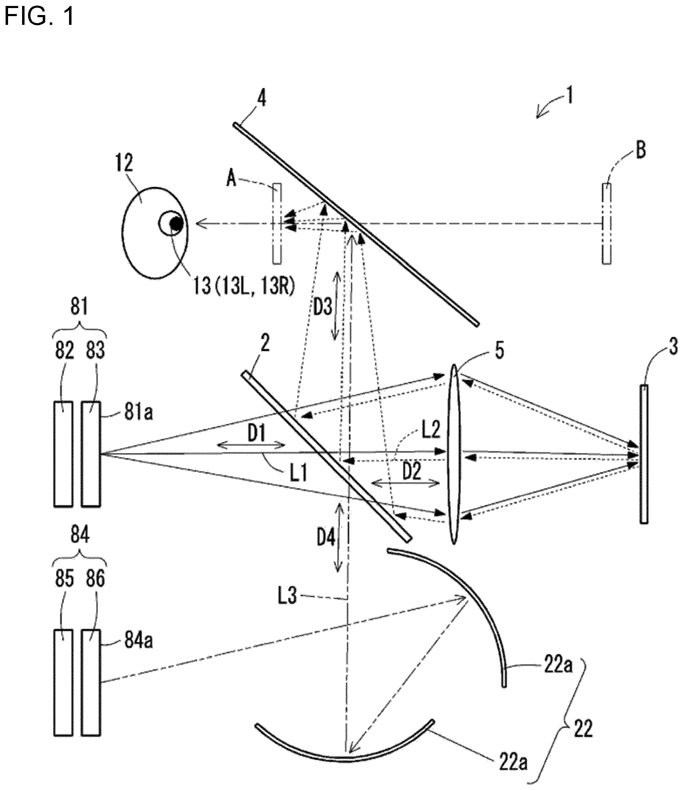

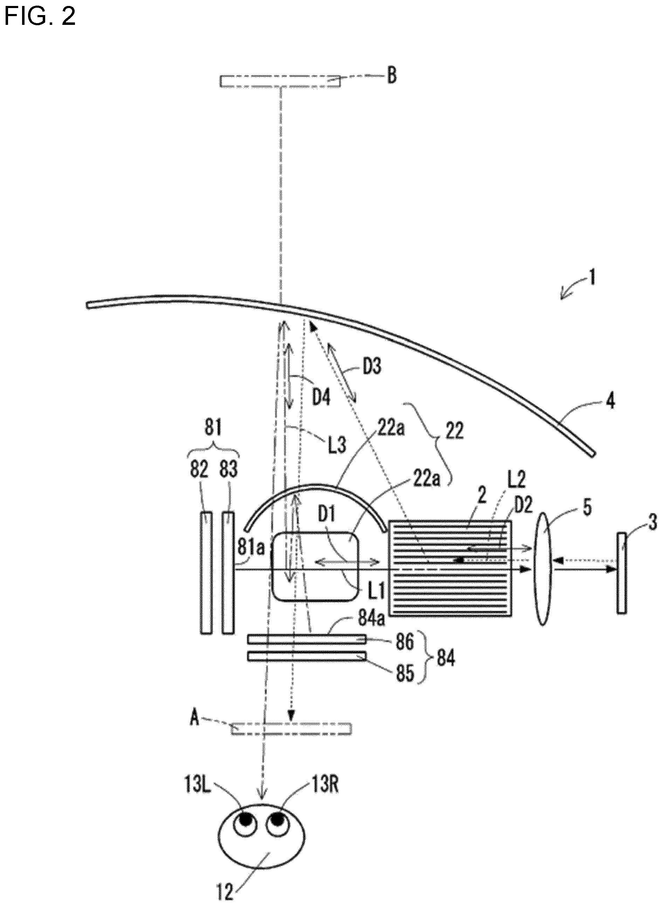

As illustrated in, for example, FIGs. 1 and 2, an aerial image projector 1 according to one embodiment of the present disclosure includes a first reflective element 2, a second reflective element 3, a first optical element 5, a first display device 81, and a second display device 84.

The first display device 81 and the second display device 84 each emit image light representing an image. The first display device 81 and the second display device 84 may each be a transmissive display device or a self-luminous display device. For example, the transmissive display device may be a liquid crystal display device. For example, the self-luminous display device may be a display device including a self-luminous element such as a light-emitting diode (LED) element, an organic electroluminescent (OEL) element, an organic LED (OLED) element, or a semiconductor laser diode (LD) element. In the example described below, both the first display device 81 and the second display device 84 are transmissive display devices.

The first display device 81 includes a display surface 81a. The first display device 81 emits image light through the display surface 81a. As illustrated in, for example, FIGs. 1 and 2, the first display device 81 may be a liquid crystal display device including a backlight 82 and a liquid crystal panel 83. The liquid crystal panel 83 may include the display surface 81a. The backlight 82 may include multiple light sources that face the display surface 81a and are arranged two-dimensionally adjacent to a back surface opposite to the display surface 81a. The light sources may be, for example, LEDs, cold cathode fluorescent lamps, halogen lamps, or xenon lamps. The backlight 82 including light sources that face the display surface 81a and are arranged adjacent to the back surface opposite to the display surface 81a can be referred to as a direct backlight. The backlight 82 may include multiple light sources arranged on the outer periphery of the liquid crystal panel 83 to guide light to the entire back surface opposite to the display surface 81a using a light guide plate. The backlight 82 including the light sources arranged on the outer periphery of the liquid crystal panel 83 can be referred to as an edge backlight. The backlight 82 may include, for example, a lens array, a light guide plate, and a diffusion plate to apply light from the light sources uniformly onto the display surface 81a.

The liquid crystal panel 83 may have the structure of a known liquid crystal panel. The known liquid crystal panel herein may be an in-plane switching (IPS) panel, a fringe field switching (FFS) panel, a vertical alignment (VA) panel, an electrically controlled birefringence (ECB) panel, or any of various other liquid crystal panels. The liquid crystal panel 83 may include a display-surface polarizing plate, a color filter substrate, a liquid crystal layer, an array substrate, and a back-surface polarizing plate. The display-surface polarizing plate may be closer to the display surface 81a than the color filter substrate, the liquid crystal layer, the array substrate, and the back-surface polarizing plate. The image light emitted from the first display device 81 may be linearly polarized in the polarization direction of the display-surface polarizing plate in the liquid crystal panel 83.

The second display device 84 includes a display surface 82a. The second display device 84 emits image light through the display surface 82a. As illustrated in, for example, FIGs. 1 and 2, the second display device 84 may be a liquid crystal display device including a backlight 85 and a liquid crystal panel 86. The liquid crystal panel 86 may include the display surface 82a. The backlight 85 may include multiple light sources that face the display surface 82a and are arranged two-dimensionally adjacent to a back surface opposite to the display surface 82a. The light sources may be, for example, LEDs, cold cathode fluorescent lamps, halogen lamps, or xenon lamps. The backlight 85 may be a direct backlight or an edge backlight. The backlight 85 may include, for example, a lens array, a light guide plate, and a diffusion plate to apply light from the light sources uniformly onto the display surface 82a.

The liquid crystal panel 86 may have the structure of a known liquid crystal panel. The known liquid crystal panel herein may be an IPS panel, an FFS panel, a VA panel, an ECB panel, or any of various other liquid crystal panels. The liquid crystal panel 86 may include a display-surface polarizing plate, a color filter substrate, a liquid crystal layer, an array substrate, and a back-surface polarizing plate. The display-surface polarizing plate may be closer to the display surface 82a than the color filter substrate, the liquid crystal layer, the array substrate, and the back-surface polarizing plate. The image light emitted from the second display device 84 may be linearly polarized in the polarization direction of the display-surface polarizing plate in the liquid crystal panel 86.

As illustrated in, for example, FIGs. 1 and 2, the first reflective element 2 transmits, in a second direction D2, a part of first image light (hereafter referred to as first light) L1 traveling in a first direction D1. The first light L1 represents an image. The first reflective element 2 may reflect the remaining part of the first light L1. As illustrated in, for example, FIGs. 1 and 2, the first reflective element 2 reflects, in a third direction D3, a part of second image light (hereafter referred to as second light) L2 traveling in the second direction D2. The second light L2 represents an image. The first reflective element 2 may transmit the remaining part of the second light L2. As illustrated in, for example, FIGs. 1 and 2, the first reflective element 2 transmits, in the third direction D3, a part of third image light (hereafter referred to as third light) L3 traveling in a fourth direction D4. The third light L3 represents an image. The first reflective element 2 may reflect the remaining part of the third light L3. The third direction D3 and the fourth direction D4 may be parallel or substantially parallel to each other, or may be different directions.

The first light L1 is image light emitted from the first display device 81. The second light L2 is reflected light that is the part of the first light L1 transmitted through the first reflective element 2 and retroreflected by the second reflective element 3. The third light L3 is image light emitted from the second display device 84.

The first light L1 may be parallel light traveling in the first direction D1 or light traveling in a direction substantially parallel to the first direction D1. The first light L1 may be light traveling mainly in the first direction D 1.

The second light L2 may be parallel light traveling in the second direction D2 or light traveling in a direction substantially parallel to the second direction D2. The second light L2 may be light traveling mainly in the second direction D2. The first reflective element 2 may reflect a part of the second light L2 as parallel light traveling in the third direction D3 or reflect a part of the second light L2 as light traveling in a direction substantially parallel to the third direction D3. The first reflective element 2 may reflect a part of the second light L2 as light traveling mainly in the third direction D3.

The third light L3 may be parallel light traveling in the fourth direction D4 or light traveling in a direction substantially parallel to the fourth direction D4. The third light L3 may be light traveling mainly in the fourth direction D4. The first reflective element 2 may transmit a part of the third light L3 as parallel light traveling in the third direction D3 or transmit a part of the third light L3 as light traveling in a direction substantially parallel to the third direction D3. The first reflective element 2 may transmit a part of the third light L3 as light traveling mainly in the third direction D3.

As described above, the traveling direction of light herein refers to a substantial traveling direction of light. The traveling direction of light herein also refers to the main traveling direction of light.

The first display device 81 may direct the first light L1 toward the first reflective element 2 in the first direction D1. The second display device 84 may direct the third light L3 toward the first reflective element 2 in the fourth direction D4.

The second display device 84 may not direct the third light L3 toward the first reflective element 2 in the fourth direction D4. In this case, the aerial image projector 1 may include an optical system 22 that directs the third light L3 emitted from the second display device 84 to travel in the fourth direction D4 and to be incident on the first reflective element 2, as illustrated in, for example, FIGs. 1 and 2. The optical system 22 may include at least one reflector 22a. The reflector 22a may include a concave mirror or a freeformed mirror. The reflector 22a is not limited to a concave mirror or a freeformed mirror, and may include a reflector such as a plane mirror or a convex mirror. The optical system 22 may include a refractor such as a lens. The optical system 22 may include an optical member such as a phase difference plate and a polarizer other than a reflector and a refractor.

The first reflective element 2 may be, for example, a reflective polarizer, a semitransparent mirror, or a beam splitter. The reflective polarizer may be a wire-grid polarizer including a light transmissive substrate and multiple metal wires on a surface of the light transmissive substrate. The light transmissive substrate may be, for example, a triacetyl cellulose (TAC) film, a polyethylene terephthalate (PET) film, or a cycloolefin polymer (COP) film. The metal wires may be made of, for example, a metal material such as aluminum, chromium, or titanium oxide. For the first reflective element 2 being a reflective polarizer in the present embodiment, the first light L1 transmitted through the first reflective element 2 is polarized linearly or slightly elliptically along the transmission axis of the first reflective element 2.

The second reflective element 3 retroreflects the first light L1 transmitted through the first reflective element 2 as the second light L2. In other words, the second light L2 is reflected light that is the first light L1 transmitted through the first reflective element 2 and retroreflected by the second reflective element 3. The second reflective element 3 may be located apart from the first reflective element 2 in the second direction D2.

The second reflective element 3 may be a retroreflective element, which is also referred to as a retroreflector. The second reflective element 3 may be, for example, a corner cube retroreflective element or a microbead retroreflective element.

The first optical element 5 is located between the first reflective element 2 and the second reflective element 3 as illustrated in, for example, FIGs. 1 and 2. The first optical element 5 may be located on the optical paths of the first light L1 and the second light L2 between the first reflective element 2 and the second reflective element 3.

The first optical element 5 collects light. The first optical element 5 collects the first light L1 transmitted through the first reflective element 2. The first optical element 5 collects the second light L2 retroreflected by the second reflective element 3. The first optical element 5 may include, for example, one or more lenses or one or more mirrors.

The first optical element 5 may be a biconvex lens as illustrated in, for example, FIGs. 1 and 2. The lens surface of the biconvex lens may be at least partially spherical or at least partially aspherical. The lens surface of the biconvex lens may be at least partially freeformed.

The first optical element 5 may be a Fresnel lens. The first optical element 5 can thus be thinner. The aerial image projector 1 can thus be compact. The Fresnel lens may include refractive portions being at least partially spherical or at least partially aspherical. Each refractive portion of the Fresnel lens may be at least partially freeformed.

The first optical element 5 may be a liquid crystal lens or a liquid lens. The liquid crystal lens or the liquid lens may change its focus or its focal point. The first optical element 5 can thus change the focus or the focal point based on, for example, the relative positions of the first reflective element 2 and the second reflective element 3. Thus, the aerial image projector 1 has higher flexibility in positioning its components.

The first optical element 5 being a lens may include, on a part of or a full portion of its lens surface, an anti-reflection (AR) coating layer that reduces reflection of the first light L1 and the second light L2. Thus, the aerial image projector 1 has higher light utilization.

Referring to FIGs. 1 and 2, the formation of an aerial image performed by the aerial image projector 1 will be described. The first light L1 emitted from the first display device 81 travels in the first direction D1 and reaches the first reflective element 2. Apart of the first light L1 reaching the first reflective element 2 is transmitted through the first reflective element 2 and travels in the second direction D2. The first light L1 transmitted through the first reflective element 2 is collected by the first optical element 5 and reaches the second reflective element 3. The first light L1 reaching the second reflective element 3 is retroreflected by the second reflective element 3 to be the second light L2. The second light L2 is collected by the first optical element 5 and reaches the first reflective element 2. A part of the second light L2 reaching the first reflective element 2 is reflected by the first reflective element 2 in the third direction D3. The second light L2 reflected by the first reflective element 2 forms an image in the air and is viewed by a user 12 as an aerial image A that is a real image.

The aerial image projector 1 may include a third reflective element 4 as illustrated in, for example, FIGs. 1 and 2. The third reflective element 4 may reflect a part of the third light L3 transmitted through the first reflective element 2 toward a left eye 13L and a right eye 13R of the user 12. The left eye 13L and the right eye 13R may be collectively referred to as eyes 13. The third reflective element 4 may be a mirror including, for example, glass or a light reflective resin. When the aerial image projector 1 is mounted on a movable body including a windshield, the windshield may serve as the third reflective element 4. The second light L2 may form an image between the third reflective element 4 and the eyes 13 of the user 12.

When light to be retroreflected by a retroreflective element is incident on a wide area of a reflective surface of the retroreflective element, the light may be affected by the size of a prism included in the retroreflective element and diffraction by the prism. In this case, the retroreflected light may diffuse to form a blurry aerial image. The diffraction by the prism included in the retroreflective element affects the light more noticeably when the distance between the display device and the retroreflective element is longer. The aerial image projector 1 includes the first optical element 5 that collects light between the first display device 81 and the second reflective element 3. In this case, the light collected by the first optical element 5 is incident on a relatively narrow area of a reflective surface of the second reflective element 3, thus reducing diffusion of the second light L2 retroreflected by the second reflective element 3. This thus increases the resolution of the aerial image A, allowing more information to be presented by the aerial image to the user.

As illustrated in, for example, FIG. 1, the third light L3 emitted from the second display device 84 travels in the fourth direction D4 and reaches the first reflective element 2. Apart of the third light L3 reaching the first reflective element 2 is transmitted through the first reflective element 2 and travels in the third direction D3. The third light L3 transmitted through the first reflective element 2 is incident on the eyes 13 of the user 12 and is viewed by the user 12 as an aerial image B that is a virtual image. The aerial image projector 1 may allow the third reflective element 4 to reflect the third light L3 transmitted through the first reflective element 2 to be incident on the eyes 13 of the user 12.

The aerial image projector 1 according to the present embodiment allows the user 12 to view both the aerial image A, which is a projected image of the first light L1 emitted from the first display device 81, and the aerial image B, which is a projected image of the third light L3 emitted from the second display device 84. This allows more information to be presented by the aerial image to the user 12.

When the aerial image projector 1 is mounted on a movable body including a windshield serving as the third reflective element 4, the aerial image A is projected inside the movable body, and the aerial image B is projected outside the movable body. In other words, the aerial image projector 1 allows the user 12 to view an aerial image seamlessly extending from inside the movable body to outside the movable body.

The aerial image projector 1 allows both the second light L2 reflected by the first reflective element 2 and the third light L3 transmitted through the first reflective element 2 to travel in the third direction D3. The aerial image projector 1 thus allows the user to view both the aerial image A and the aerial image B using a reflective element with a simple structure, for example, the windshield serving as the third reflective element 4.

In the aerial image projector 1, the first light L1 reaching the first reflective element 2 may be polarized in the polarization direction of the first reflective element 2. In other words, the aerial image projector 1 may polarize the first light L1 reaching the first reflective element 2 in a direction parallel to the transmission axis of the first reflective element 2. For the first reflective element 2 being a reflective polarizer, the first light L1 polarized along the transmission axis of the first reflective element 2 reduces reflection of the first light L1 from the first reflective element 2. This can thus increase the light utilization of the aerial image projector 1 and increase the brightness of the aerial image A. The structure may also reduce the light amount of the backlight 82 to reduce the power consumption of the aerial image projector 1.

The aerial image projector 1 may adjust the polarization direction of the first light L1 emitted from the first display device 81 to allow the first light L1 reaching the first reflective element 2 to be polarized in the direction parallel to the transmission axis of the first reflective element 2. The aerial image projector 1 may adjust the polarization direction of the display-surface polarizing plate in the liquid crystal panel 83 to allow the first light L1 reaching the first reflective element 2 to be polarized in the direction parallel to the transmission axis of the first reflective element 2. In some embodiments, the aerial image projector 1 may include an optical member between the first display device 81 and the first reflective element 2 to polarize the first light L1 in the direction parallel to the transmission axis of the first reflective element 2.

In the aerial image projector 1, the third light L3 reaching the first reflective element 2 may be polarized in the polarization direction of the first reflective element 2. In other words, the aerial image projector 1 may allow the third light L3 reaching the first reflective element 2 to be polarized in the direction parallel to the transmission axis of the first reflective element 2. For the first reflective element 2 being a reflective polarizer, the third light L3 polarized along the transmission axis of the first reflective element 2 reduces reflection of the third light L3 from the first reflective element 2. This can thus increase the light utilization of the aerial image projector 1 and increase the brightness of the aerial image B. The structure may also reduce the light amount of the backlight 85 to reduce the power consumption of the aerial image projector 1.

The aerial image projector 1 may adjust the polarization direction of the third light L3 emitted from the second display device 84 to allow the third light L3 reaching the first reflective element 2 to be polarized in the direction parallel to the transmission axis of the first reflective element 2. The aerial image projector 1 may adjust the polarization direction of the display-surface polarizing plate in the liquid crystal panel 86 to allow the third light L3 reaching the first reflective element 2 to be polarized in the direction parallel to the transmission axis of the first reflective element 2. In some embodiments, the aerial image projector 1 may include an optical member to allow the optical system 22 between the second display device 84 and the first reflective element 2 to polarize the third light L3 in the direction parallel to the transmission axis of the first reflective element 2.

The aerial image projector 1 may include the second reflective element 3 adjacent to the focal point of the first optical element 5. This structure allows the first light L1 collected by the first optical element 5 to be incident on a narrow area of the reflective surface of the second reflective element 3. This thus reduces diffusion of the second light L2, and increases the resolution of the aerial image A and the amount of information presented by the aerial image to the user 12.

The aerial image projector 1 may include the first display device 81 adjacent to the focal point of the first optical element 5 and the second reflective element 3 adjacent to the focal point of the first optical element 5. More specifically, the aerial image projector 1 may include the first display device 81 and the second reflective element 3 to be optically conjugated with each other. This allows an aerial image with high resolution to be projected at varying positions in the air by simply translating or rotating the first optical element 5.

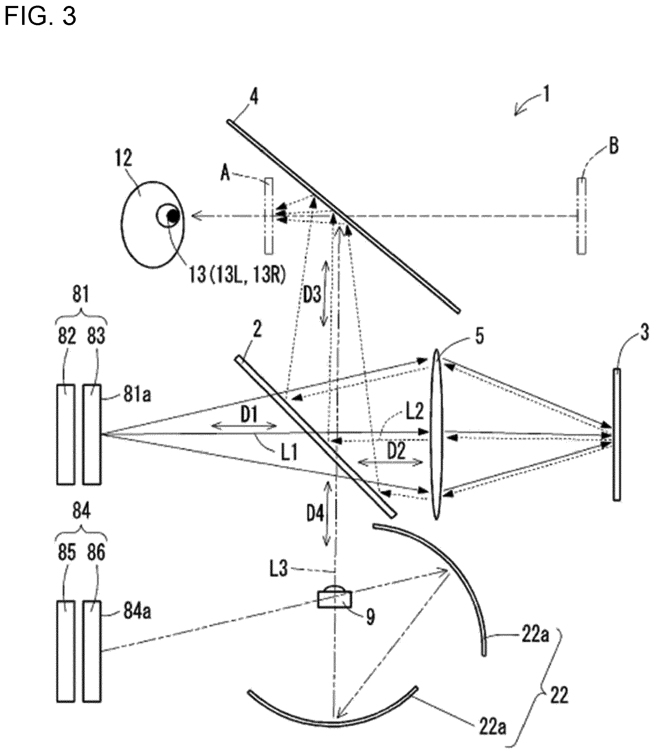

The aerial image projector 1 may include a camera 9 as illustrated in, for example, FIG. 3. The camera 9 may be a visible light camera or an infrared camera. The infrared light camera may be a far-infrared camera. The camera 9 may capture a visible light image and an infrared light image. The camera 9 may be a monocular camera or a stereo camera. The camera 9 may include, for example, a charge-coupled device (CCD) image sensor or a complementary metal-oxide semiconductor (CMOS) image sensor.

The camera 9 may capture an image of the user 12. The camera 9 may capture an image of the face of the user 12. The camera 9 may capture an image of the eyes 13 of the user 12. The camera 9 may capture an image of at least one of the left eye 13L or the right eye 13R of the user 12. The aerial image projector 1 may detect the positions of the left eye 13L and the right eye 13R based on the captured image. The aerial image projector 1 may adjust, for example, the projection positions and the brightness of the aerial images A and B based on the detected positions of the left eye 13L and the right eye 13R. This allows the user 12 at various positions to view the aerial images A and B. The camera 9 may capture an image of feature points included in the face of the user 12 for identifying the position of at least one of the left eye 13L or the right eye 13R, rather than capturing the image of the eyes 13 of the user 12. The feature points may include the eyebrows, nose, and lips of the user 12.

As illustrated in, for example, FIG. 3, the camera 9 may capture an image of an area in the third direction D3 through the first reflective element 2. The camera 9 may capture an image of the user 12 through the first reflective element 2. The camera 9 may capture an image of the user 12 reflected by the third reflective element 4 through the first reflective element 2. This structure can increase the positioning flexibility of the camera 9.

The aerial image projector 1 may include no camera 9 and may be connected to an external camera (not illustrated) external to the projector. The aerial image projector 1 may include an input terminal for receiving signals from the external camera. The external camera may be connected to the input terminal directly. The external camera may be connected to the input terminal indirectly through a shared network.

The aerial image projector 1 may include a controller (not illustrated). The controller is connected to the components of the aerial image projector 1 and controls the components. The controller may be, for example, a processor. The controller may include one or more processors. The processors may include a general-purpose processor that reads a specific program to perform a specific function, and a processor dedicated to specific processing. The dedicated processor may include an application-specific integrated circuit (ASIC). The processor may include a programmable logic device (PLD). The PLD may include a field-programmable gate array (FPGA). The controller may be either a system on a chip (SoC) or a system in a package (SiP) in which one or more processors cooperate with other components.

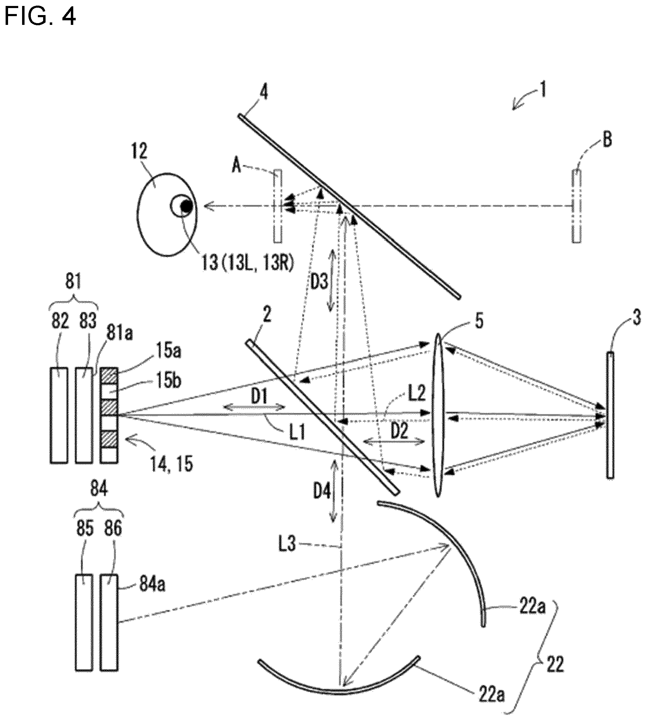

An aerial image projector according to another embodiment of the present disclosure will now be described with reference to FIGs. 4 to 14.

The first display device 81 may display, on the display surface 81a, a first composite image including first left-eye images viewable by the left eye 13L of the user 12 and first right-eye images viewable by the right eye 13R of the user 12. The first right-eye image has parallax with the first left-eye image. The first light L1 may be image light representing the first composite image including the first left-eye images and the first right-eye images.

The aerial image projector 1 may include a third optical element 14 as illustrated in, for example, FIGs. 4 to 6. The third optical element 14 may divide the first light L1 representing the first composite image into first left-eye image light representing the first left-eye image and first right-eye image light representing the first right-eye image light. The third optical element 14 may be located between the backlight 82 and the liquid crystal panel 83 or in front of the display surface 81a (specifically, downstream from the liquid crystal panel 83 in the travel direction of the first light L1) as illustrated in, for example, FIG. 4.

The third optical element 14 may include a parallax barrier 15 as illustrated in, for example, FIG. 4. The parallax barrier 15 includes multiple light-blocking portions 15a. The light-blocking portions 15a block the image light emitted from the first display device 81. The light-blocking portions 15a define open areas 15b between adjacent light-blocking portions 15a. The open areas 15b have a higher light transmittance than the light-blocking portions 15a. In other words, the light-blocking portions 15a have a lower light transmittance than the open areas 15b.

The open areas 15b are parts of the parallax barrier 15 to transmit light incident on the parallax barrier 15. The open areas 15b may transmit light with a transmittance of a first predetermined value or greater. The first predetermined value may be, for example, 100% or a value close to 100%. The light-blocking portions 15a are parts of the parallax barrier 15 to block light incident on the parallax barrier 15. In other words, the light-blocking portions 15a block an image displayed by the first display device 81. The light-blocking portions 15a may block light with a transmittance of a second predetermined value or less. The second predetermined value may be, for example, 0% or a value close to 0%. The ratio of the second predetermined value to the first predetermined value may be 1/100 or 1/1000.

The parallax barrier 15 may be a film or a plate with a transmittance less than the second predetermined value. In this case, the light-blocking portions 15a are parts of the film or plate. The open areas 15b are slits in the film or plate. The film may be made of a resin or another material. The plate may be made of a resin, metal, or another material. The parallax barrier 15 may be a member other than a film or a plate. The parallax barrier 15 may include a base made of a light-blocking material or of a material containing an additive with light-blocking properties.

The parallax barrier 15 may be, for example, a liquid crystal shutter. The liquid crystal shutter can control the light transmittance in response to a voltage applied. The liquid crystal shutter may include multiple pixels and control the transmittance of light for each pixel. The liquid crystal shutter can form a portion with a high light transmittance or a portion with a low light transmittance in an intended shape. For the parallax barrier 15 being a liquid crystal shutter, the open areas 15b may have a transmittance of the first predetermined value or greater. For the parallax barrier 15 being a liquid crystal shutter, the light-blocking portions 15a may have a transmittance of the second predetermined value or less.

The aerial image projector 1 illustrated in FIG. 4 allows the user 12 to three-dimensionally view the aerial image A that is a real image by observing a projected image formed by the first left-eye image light with the left eye 13L and a projected image formed by the first right-eye image light with the right eye 13R.

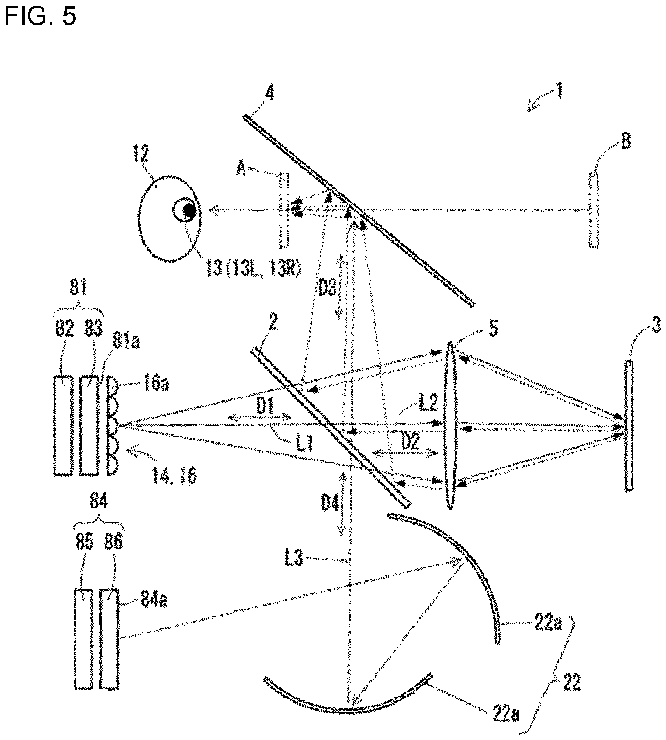

The third optical element 14 is not limited to the parallax barrier 15. The third optical element 14 may include a lenticular lens 16 as illustrated in, for example, FIG. 5. The lenticular lens 16 may include, for example, multiple semicylindrical lenses 16a that extend in a predetermined direction and are arranged in a direction orthogonal to the predetermined direction. The aerial image projector 1 including the third optical element 14 including the lenticular lens 16 allows the user 12 to three-dimensionally view the aerial image A.

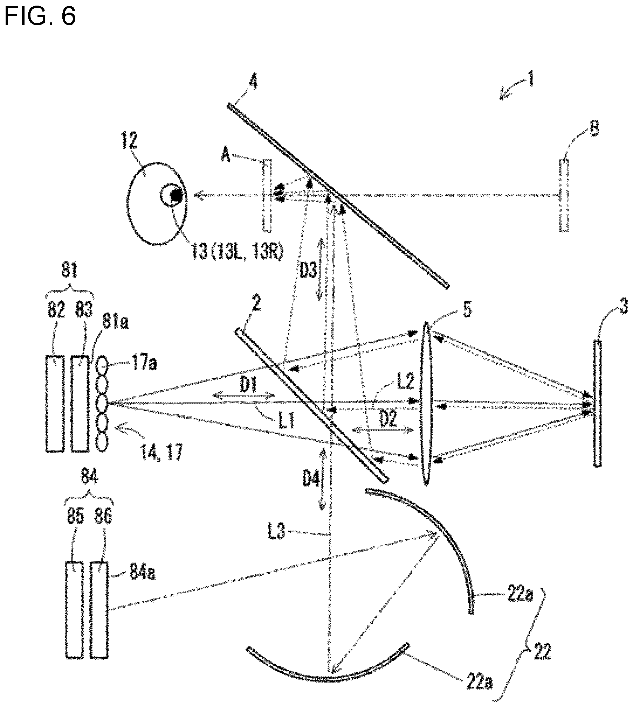

The third optical element 14 is not limited to the parallax barrier 15 and the lenticular lens 16. The third optical element 14 may include a microlens array 17 as illustrated in, for example, FIG. 6. The microlens array 17 includes, for example, multiple microlenses 17a arranged in a matrix. Each of the microlenses 17a may be, for example, a biconvex lens, a plano-convex lens, or a meniscus lens. The aerial image projector 1 including the third optical element 14 including the microlens array 17 allows the user 12 to three-dimensionally view the aerial image A.

The second display device 84 may display, on the display surface 82a, a second composite image including second left-eye images viewable by the left eye 13L of the user 12 and second right-eye images viewable by the right eye 13R of the user 12. The second right-eye image has parallax with the second left-eye image. The third light L3 may be image light representing the second composite image including the second left-eye images and the second right-eye images.

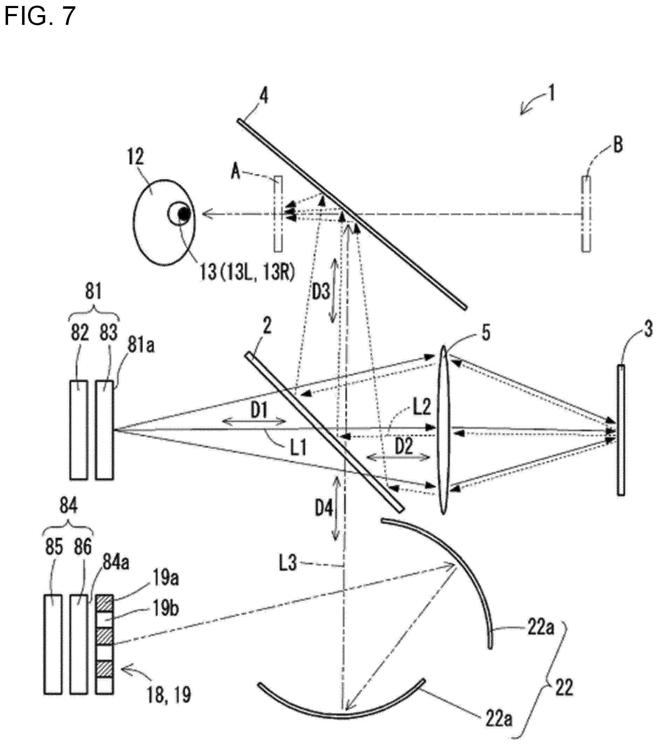

The aerial image projector 1 may include a fourth optical element 18 as illustrated in, for example, FIGs. 7 to 9. The fourth optical element 18 may divide the third light L3 representing the second composite image into second left-eye image light representing the second left-eye image and second right-eye image light representing the second right-eye image. The fourth optical element 18 may be located between the backlight 85 and the liquid crystal panel 86 or in front of the display surface 82a (specifically, downstream from the liquid crystal panel 86 in the travel direction of the third light L3) as illustrated in, for example, FIG. 7.

The fourth optical element 18 may include a parallax barrier 19 including multiple light-blocking portions 19a as illustrated in, for example, FIG. 7. The light-blocking portions 19a define open areas 19b between adjacent light-blocking portions 19a. The parallax barrier 19 has the structure similar to the structure of the parallax barrier 15, and the structure will not be described in detail.

The aerial image projector 1 illustrated in FIG. 7 allows the user 12 to three-dimensionally view the aerial image B that is a virtual image by observing the second left-eye image light with the left eye 13L and the second right-eye image light with the right eye 13R.

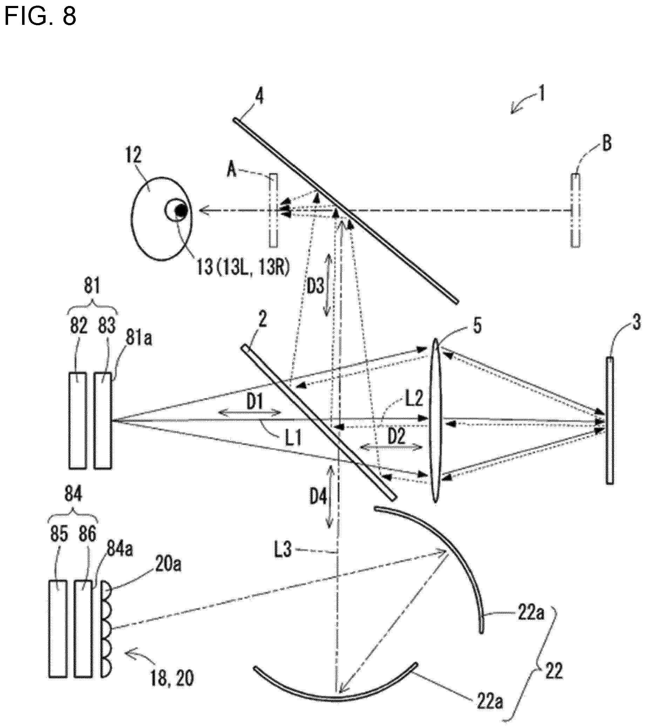

The fourth optical element 18 is not limited to the parallax barrier 19. As illustrated in FIG. 8, the fourth optical element 18 may include a lenticular lens 20 including multiple semicylindrical lenses 20a. The lenticular lens 20 has the structure similar to the structure of the lenticular lens 16, and the structure will not be described in detail. The aerial image projector 1 including the fourth optical element 18 including the lenticular lens 20 allows the user 12 to three-dimensionally view the aerial image B.

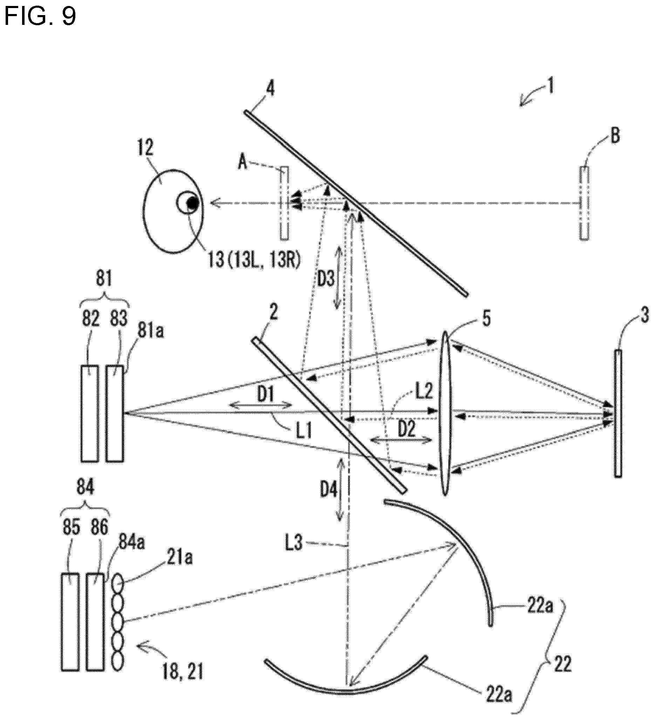

The fourth optical element 18 is not limited to the parallax barrier 19 and the lenticular lens 20. The fourth optical element 18 may include a microlens array 21 including multiple microlenses 21a as illustrated in FIG. 9. The microlens array 21 has the structure similar to the structure of the microlens array 17, and the structure will not be described in detail. The aerial image projector 1 including the fourth optical element 18 including the microlens array 21 allows the user 12 to three-dimensionally view the aerial image B.

Either the aerial image A or the aerial image B is not limited to a stereoscopic image as in the above embodiments. In the aerial image projector 1, both the aerial image A and the aerial image B may be stereoscopic images. The term stereoscopic image herein refers to an image three-dimensionally viewable by the user 12.

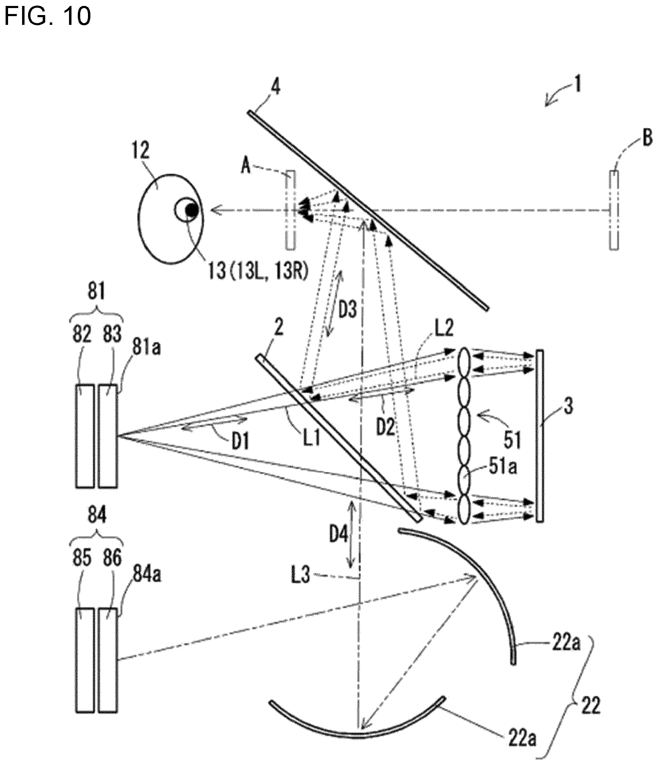

The first optical element 5 may include a microlens array 51 as illustrated in, for example, FIG. 10. The microlens array 51 is an optical element including multiple microlenses 51a arrayed on a substrate. The microlenses 51a may be circular, rectangular, or polygonal as viewed in a direction orthogonal to the main surface of the substrate. The microlenses 51a may be arranged regularly (specifically, in a matrix) or randomly. The lens surface of each microlens 51a may be at least partially spherical or at least partially aspherical. The lens surface of each microlens 51a may be at least partially freeformed. For the first optical element 5 being the microlens array 51, the arrangement of the microlenses 51a and the shape and size of each microlens 51a can be adjusted to finely control the distribution of the first light L1 and the second light L2. This thus increases the resolution of the aerial image A, allowing more information to be presented by the aerial image to the user 12.

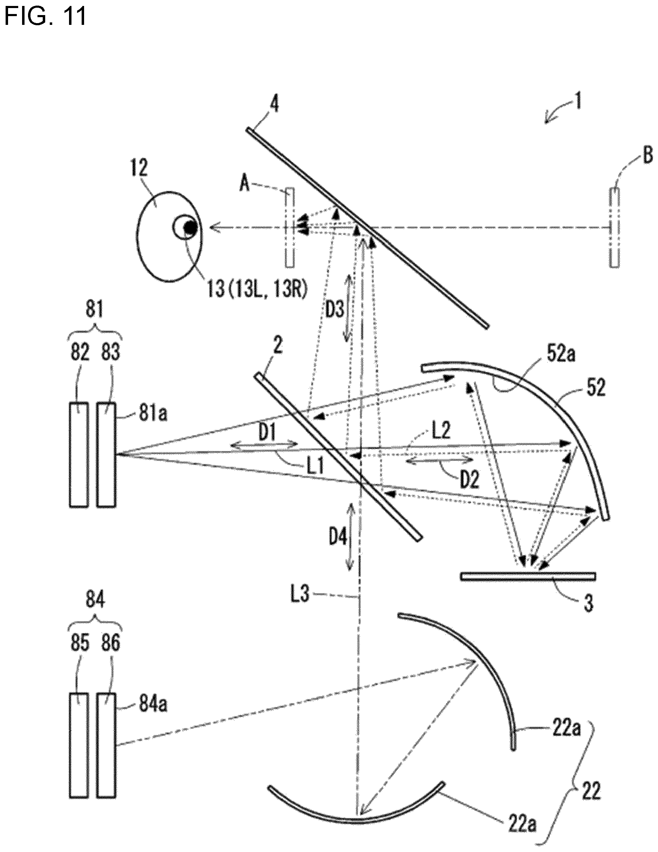

The first optical element 5 may include a concave mirror 52 as illustrated in, for example, FIG. 11. A reflective surface 52a of the concave mirror 52 may be at least partially spherical or at least partially aspherical. The reflective surface 52a may be at least partially freeformed. For the first optical element 5 being the concave mirror 52, the aerial image projector 1 with the simple structure can increase the resolution of the aerial image A. This allows more information to be presented by the aerial image to the user 12.

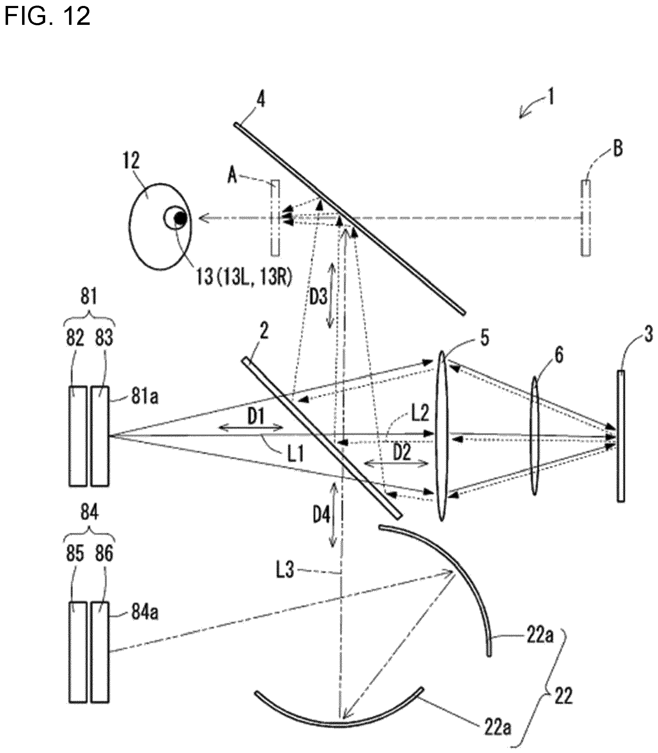

The aerial image projector 1 may include a second optical element 6 as illustrated in, for example, FIG. 12. The second optical element 6 may be located between the second reflective element 3 and the first optical element 5. The second optical element 6 may be located adjacent to the reflective surface of the second reflective element 3. The second optical element 6 may collect scattering light included in the second light L2. This reduces diffusion of the second light L2 retroreflected by the second reflective element 3. This thus increases the resolution of the aerial image A, allowing more information to be presented by the aerial image to the user 12.

The second optical element 6 may be, for example, a plano-convex lens, a biconvex lens, a meniscus lens, or a Fresnel lens. The second optical element 6 may include one or more lenses. The second optical element 6 may be, for example, a microlens array.

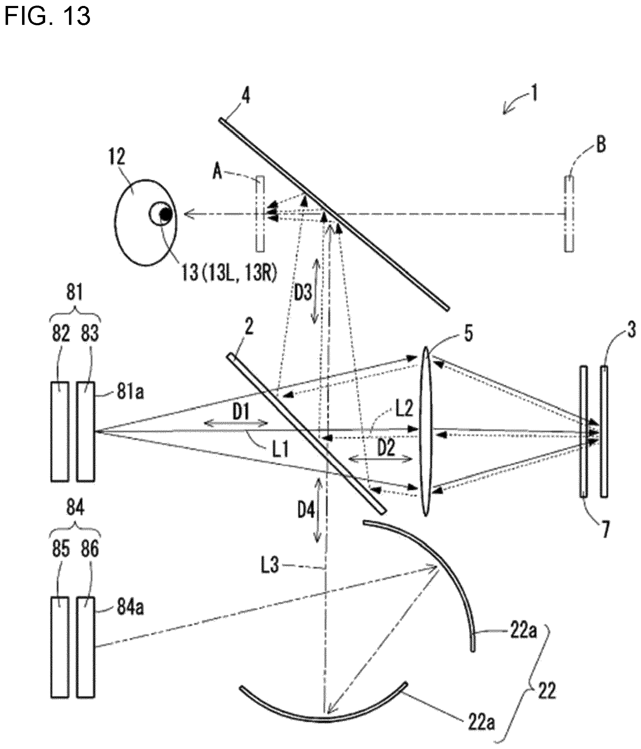

The aerial image projector 1 may include a phase difference plate 7 as illustrated in, for example, FIG. 13. The phase difference plate 7 is located between the second reflective element 3 and the first optical element 5. The phase difference plate 7 may be located on the optical paths of the first light L1 and the second light L2 between the second reflective element 3 and the first optical element 5. The phase difference plate 7 may rotate the polarization direction of the transmitted light.

For the first reflective element 2 being a reflective polarizer, the first light L1 transmitted through the first reflective element 2 is polarized linearly or slightly elliptically along the transmission axis of the first reflective element 2. The first light L1 retroreflected by the second reflective element 3 or the second light L2 may be polarized linearly or slightly elliptically in the polarization direction of the first reflective element 2. Thus, the second light L2 incident on the first reflective element 2 without changing its polarization state may be polarized along the transmission axis of the first reflective element 2. This can increase the proportion of the second light L2 transmitted through the first reflective element 2.

The phase difference plate 7 may be, for example, a quarter-wavelength plate. The first light L1 transmitted through the first reflective element 2 passes through the quarter-wavelength plate to be circularly polarized light that rotates in a first rotation direction. The first light L1 passing through the quarter-wavelength plate is retroreflected by the second reflective element 3 to be circularly-polarized second light L2 that rotates in a second rotation direction reverse to the first direction. The second light L2 retroreflected by the second reflective element 3 passes through the quarter-wavelength plate to be linearly polarized light traveling in the direction intersecting with the transmission axis of the first reflective element 2. In other words, the second light L2 is polarized linearly along the reflective axis of the first reflective element 2. The phase difference plate 7 that is a quarter-wavelength plate allows the second light L2 to be polarized linearly or slightly elliptically in the direction intersecting with the first light L1. This can increase the reflectance of the second light L2 from the first reflective element 2. The aerial image can thus have higher brightness. The structure may also reduce the light amount of the backlight 82 to reduce the power consumption of the aerial image projector 1.

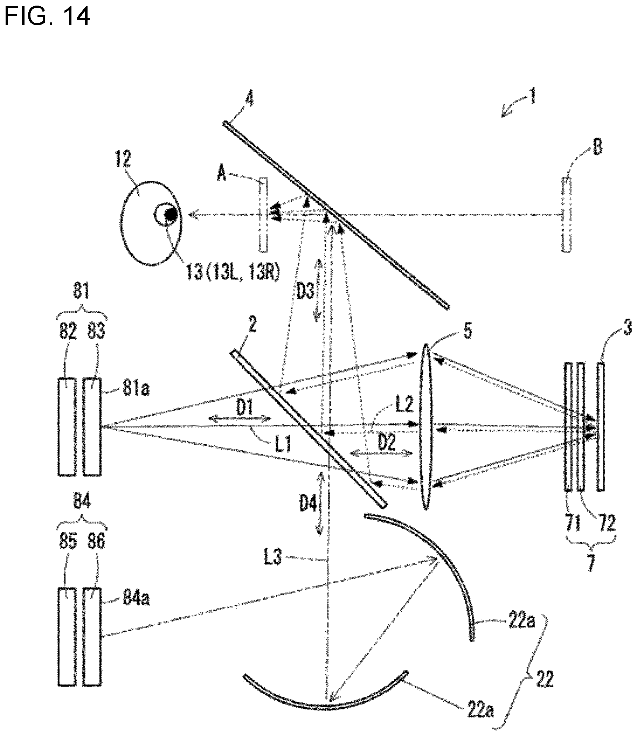

The phase difference plate 7 may include a quarter-wavelength plate 71 and a half-wavelength plate 72 as illustrated in, for example, FIG. 14. The half-wavelength plate 72 is located between the quarter-wavelength plate 71 and the second reflective element 3. The half-wavelength plate 72 may be located on the optical paths of the first light L1 and the second light L2 between the quarter-wavelength plate 71 and the second reflective element 3.

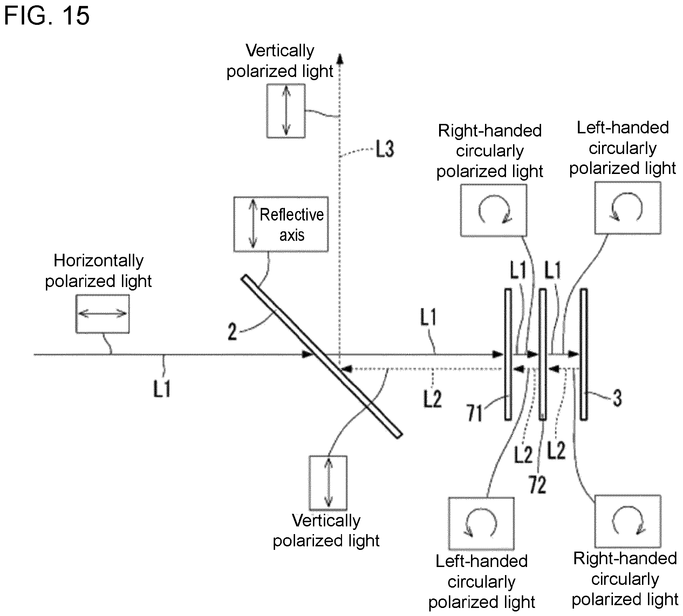

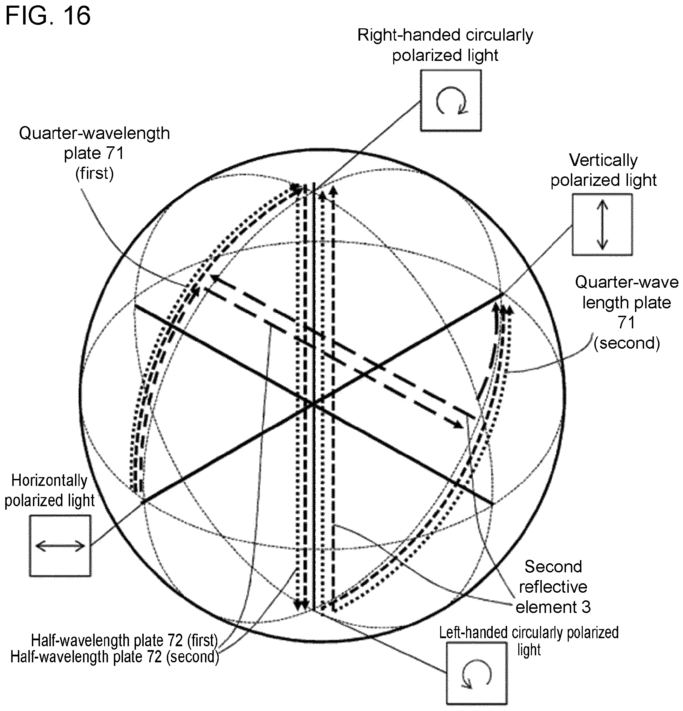

Light passing through the quarter-wavelength plate 71 may rotate by a different degree depending on the wavelength. The light transmitted through the quarter-wavelength plate 71 is circularly polarized light that rotates in the first rotation direction in which the degree of rotation differs depending on the wavelength (right-handed circularly polarized light illustrated in FIGs. 15 and 16). As illustrated in FIGs. 15 and 16, the light transmitted through the quarter-wavelength plate 71 passes through the half-wavelength plate 72 to move to the opposite side of the Poincaré sphere to be circularly polarized light that rotates in the second rotation direction (left-handed circularly polarized light illustrated in FIGs. 15 and 16). The light passing through the half-wavelength plate 72 rotates by a degree that remains different depending on the wavelength. As illustrated in FIGs. 15 and 16, the light passing through the half-wavelength plate 72 is retroreflected by the second reflective element 3 to move to the opposite side of the Poincaré sphere to be the second light L2 being circularly polarized light that rotates in the first rotation direction. The second light L2 rotates by substantially the same degree as the degree by which the light rotates when the light is first transmitted through the quarter-wavelength plate 71. As illustrated in FIGs. 15 and 16, the second light L2 passes through the half-wavelength plate 72 to move to the opposite side of the Poincaré sphere to be circularly polarized light that rotates in the second rotation direction. The second light L2 rotates by substantially the same degree after passing through the half-wavelength plate 72 as the degree by which the first light L1 rotates after passing through the half-wavelength plate 72. The second light L2 transmitted through the quarter-wavelength plate 71 rotates by a different degree depending on the wavelength and is polarized in a direction orthogonal to the first light L1.

The phase difference plate 7 including the quarter-wavelength plate 71 and the half-wavelength plate 72 causes S-polarized first light L1 to be incident on the second reflective element 3 and P-polarized second light L2 to be incident on the first reflective element 2 to reduce a loss caused by the degree of rotation in the polarization direction that depends on the wavelength. This structure uses a high reflectance near Brewster's angle for S polarization to increase the reflectance for the first light L1 on the second reflective element 3 and the second light L2 on the first reflective element 2. The aerial image can thus have higher brightness. The structure may also reduce the light amount of the backlight 85 to reduce the power consumption of the aerial image projector 1.

In the above embodiments, the first display device 81 and the second display device 84 are, but not limited to, liquid crystal displays. The first display device 81 may be an LED display device, an OEL display device, or an OLED display device. The aerial image projector 1 may include a polarizing plate that linearly polarizes the first light L1 emitted from the first display device 81 in a predetermined direction. The second display device 84 may be an LED display device, an OEL display device, or an OLED display device. The aerial image projector 1 may include a polarizing plate that linearly polarizes the third light L3 emitted from the second display device 84 in a predetermined direction.

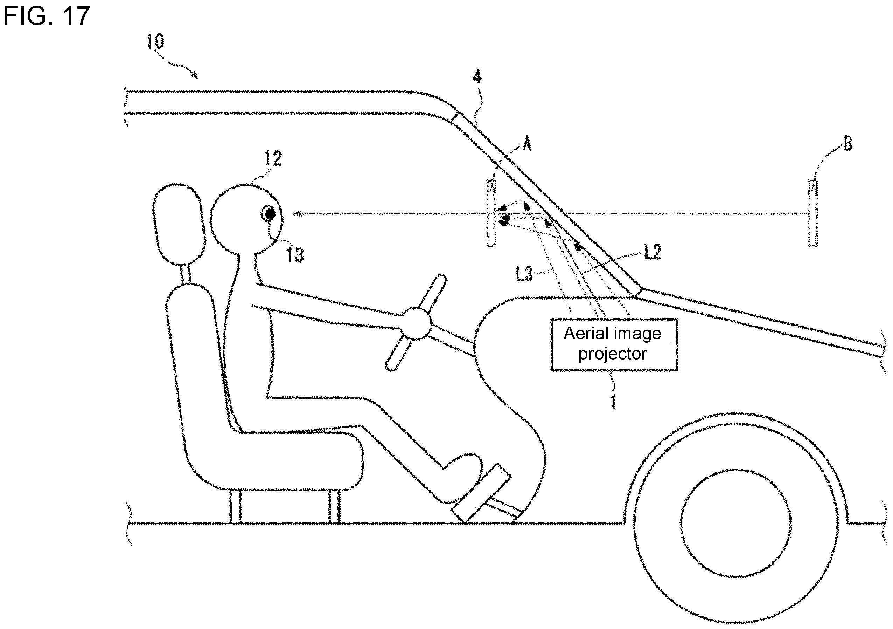

A movable body according to one embodiment of the present disclosure will now be described with reference to FIG. 17. The aerial image projector 1 according to the above embodiments may be mounted on a movable body 10 as illustrated in, for example, FIG. 17.

Examples of the movable body in the present disclosure include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. Examples of the vehicle may include a human-powered vehicle. The classification of the vehicle is not limited to the above examples. Examples of the automobile include an industrial vehicle travelling on a road. One type of vehicle may fall within multiple classes. Examples of the vessel include a jet ski, a boat, and a tanker. Examples of the aircraft include a fixed-wing aircraft and a rotary-wing aircraft.

In the example of FIG. 17, the movable body 10 is a passenger vehicle. The movable body 10 may be any of the above examples in place of a passenger vehicle. The aerial image projector 1 may be at any position inside or outside the movable body 10. For example, the aerial image projector 1 may be inside a dashboard in the movable body 10.

In the aerial image projector 1, the second light L2 reflected by the first reflective element 2 may be reflected by a windshield 11 as the third reflective element 4 and form an image in the air between the windshield 11 and the user 12. This allows the user 12 to view the aerial image A that is a real image projected inside the movable body 10. In the aerial image projector 1, the third light L2 transmitted through the first reflective element 2 may be reflected by the windshield 11 as the third reflective element 4 and be incident on the left eye 13L and the right eye 13R of the user 12. This allows the user 12 to view the aerial image B that is a virtual image projected outside the movable body 10. Thus, the movable body 10 allows the user 12 to view both the aerial image A projected inside the movable body 10 and the aerial image B projected outside the movable body 10. In other words, the movable body 10 allows the user 12 to view aerial images A and B seamlessly extending from inside the movable body 10 to outside the movable body 10. This allows more information to be presented by the aerial image to the user 12.

The present disclosure may be implemented in the following forms.

In one or more embodiments of the present disclosure, an aerial image projector includes a first reflective element, a second reflective element, a first optical element, a first display device, and a second display device. The first reflective element transmits, in a second direction, a part of first image light traveling in a first direction and representing an image, reflects, in a third direction, a part of second image light traveling in the second direction, and transmits, in the third direction, a part of third image light traveling in a fourth direction. The second reflective element retroreflects the first image light transmitted through the first reflective element as the second image light. The first optical element is between the first reflective element and the second reflective element and collects the first image light and the second image light. The first display device emits the first image light. The second display device emits the third image light.

In one or more embodiments of the present disclosure, a movable body includes the aerial image projector.

In one embodiment of the present disclosure, more information can be presented by an aerial image to a user.

In the present disclosure, first, second, or others are identifiers for distinguishing the components. The identifiers of the components distinguished with first, second, and others in the present disclosure are interchangeable. For example, the first reflective element can be interchangeable with the second reflective element. The identifiers are to be interchanged together. The components for which the identifiers are interchanged are also to be distinguished from one another. The identifiers may be eliminated. The components without such identifiers can be distinguished with reference numerals. The identifiers such as first and second in the present disclosure alone should not be used to determine the order of components or to suggest the existence of smaller number identifiers.

Although embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

### REFERENCE SIGNS

- 1: aerial image projector
- 2: first reflective element
- 3: second reflective element
- 4: third reflective element
- 5: first optical element
- 6: second optical element
- 7: phase difference plate
- 71: quarter-wavelength plate
- 72: half-wavelength plate
- 9: camera
- 10: movable body
- 11: windshield
- 12: user
- 13: eye
- 13L: left eye
- 13R: right eye
- 14: third optical element
- 15: parallax barrier
- 15a: light-blocking portion
- 15b: open area
- 16: lenticular lens
- 16a: semicylindrical lens
- 17: microlens array
- 17a: microlens
- 18: fourth optical element
- 19: parallax barrier
- 19a: light-blocking portion
- 19b: open area
- 20: lenticular lens
- 20a: semicylindrical lens
- 21: microlens array
- 21a: microlens
- 22: optical system
- 22a: reflector
- 51: microlens array
- 51a: microlens
- 52: concave mirror
- 81: first display device
- 81a: display surface
- 82: backlight
- 83: liquid crystal panel
- 84: second display device
- 82a: display surface
- 85: backlight
- 86: liquid crystal panel

## Claims

1. An aerial image projector, comprising:
a first reflective element configured to transmit, in a second direction, a part of first image light traveling in a first direction and representing an image, reflect, in a third direction, a part of second image light traveling in the second direction, and transmit, in the third direction, a part of third image light traveling in a fourth direction;
a second reflective element configured to retroreflect the first image light transmitted through the first reflective element as the second image light;
a first optical element between the first reflective element and the second reflective element, the first optical element being configured to collect the first image light and the second image light;
a first display device configured to emit the first image light; and
a second display device configured to emit the third image light.

2. The aerial image projector according to claim 1, wherein
the first reflective element is a reflective polarizer.

3. The aerial image projector according to claim 2, wherein
at least one of the first image light or the third image light is polarized in a direction parallel to a transmission axis of the reflective polarizer.

4. The aerial image projector according to any one of claims 1 to 3, further comprising:
an optical system configured to direct the third image light emitted from the second display device to travel in the fourth direction and to be incident on the first reflective element.

5. The aerial image projector according to claim 4, wherein
the optical system includes at least one reflector.

6. The aerial image projector according to any one of claims 1 to 5, further comprising:
a camera configured to capture an image of an area in the third direction through the first reflective element.

7. The aerial image projector according to any one of claims 1 to 6, wherein
the second reflective element is adjacent to a focal point of the first optical element.

8. The aerial image projector according to any one of claims 1 to 7, wherein
the first display device is adjacent to a focal point of the first optical element.

9. The aerial image projector according to any one of claims 1 to 8, further comprising:
a second optical element between the second reflective element and the first optical element, the second optical element being configured to collect light.

10. The aerial image projector according to any one of claims 1 to 9, further comprising:
a phase difference plate between the second reflective element and the first optical element, the phase difference plate being configured to rotate a polarization direction of transmitted light.

11. The aerial image projector according to any one of claims 1 to 10, further comprising:
a third reflective element configured to reflect the second image light reflected by the first reflective element toward a user and to reflect the third image light transmitted through the first reflective element toward the user.

12. A movable body, comprising:
the aerial image projector according to any one of claims 1 to 11.
